# EUROPÄISCHE PATENTSCHRIFT

(11) **EP 3 262 102 B1**
(45) Veröffentlichungstag und Bekanntmachung des Hinweises auf die Patenterteilung: **27.06.2018**
(21) Anmeldenummer: 16781107.4
(22) Anmeldetag: 11.10.2016
(51) Int. Cl.: C08G 77/06, C08G 77/16, C08G 77/18

(54) **VERFAHREN ZUR HERSTELLUNG VON HYDROXYGRUPPEN UND ALKOXYGRUPPEN AUFWEISENDEN SILICONHARZEN**
METHOD FOR PREPARING SILICONE RESINS CONTAINING HYDROXY GROUPS AND ALKOXY GROUPS
PROCÉDÉ DE FABRICATION DE RÉSINES DE SILICONE COMPORTANT DES GROUPES HYDROXY ET ALCOXY

(30) Priorität: 29.02.2016 DE 102016203192
(43) Veröffentlichungstag der Anmeldung: 03.01.2018
(73) Patentinhaber: Wacker Chemie AG, 81737 München (DE)
(72) Erfinder: HOFFMANN, Sabine, 01445 Radebeul (DE)
(74) Vertreter: Fritz, Helmut
(86) Internationale Anmeldenummer: PCT/EP2016/074366
(87) Internationale Veröffentlichungsnummer: WO 2017/148546

(56) Entgegenhaltungen:
- DE-A1- 10 332 622
- DE-A1-102013 212 980

## Beschreibung

Die Erfindung betrifft ein Verfahren zur Herstellung von Hydroxygruppen und Alkoxygruppen aufweisenden Siliconharzen ohne Zusatz organischer Lösungsmittel.

Siliconharze bzw. deren Vorprodukte lassen sich wie z.B. in EP0927734 beschrieben durch partielle oder vollständige Alkoxylierung und anschließender partieller oder nahezu vollständiger Hydrolyse in Gegenwart eines mit Wasser nicht mischbaren Lösungsmittels aus Chlorsilanen herstellen. Katalysator ist meist der durch die Chlorsilane eingebrachte Chlorwasserstoff oder wässrige Salzsäure.
Bei der Umsetzung von Chlorsilanen mit Alkohol und Wasser besteht ein Ziel, den entstehenden Chlorwasserstoff so vollständig wie möglich zurückzugewinnen, um Abwasser zu vermeiden bzw. zu minimieren und den Chlorwasserstoff wieder für die Chlorsilansynthese einzusetzen. Sehr gut gelingt das schon, wie in DE102005003899 gezeigt, bei Verwendung von Kolonnen, die aus Reaktions- und Destillationseinheit bestehen. Aber auch hier ist der Einsatz eines an der Reaktion nicht beteiligten organischen Lösemittels erforderlich. Unerwünschte Spuren dieser Lösemittel wie z.B. Toluol sind in den Harzlösungen häufig noch vorhanden und führen somit zu Einschränkungen auf verschiedenen Anwendungsgebieten.

Die durch Hydrolyse aus Chlorsilanen hergestellten Alkoxysilane enthalten bedingt durch die Chlorsilansynthese zum Teil erhebliche Mengen an chlorierten Kohlenwasserstoffen. Verfahren zur Chloridreduzierung durch Neutralisation oder destillative Abtrennung sind bekannt. DE10332622 beschreibt ein Verfahren zur Spaltung von in Alkoxysilanen enthaltenen chlorierten Kohlenwasserstoffen, die sich durch Chlorwasserstoffbildung störend auf die Weiterverarbeitung von Alkoxysilanen auswirken. Dieses Verfahren ist aufwendig und entsprechend hoch sind die Kosten für das Produkt. DE102013212980 offenbart ein kontinuierliches Verfahren zur Herstellung von Organopolysiloxanen mit einem OH-Gehalt von 3,0-10,0 Gew.-%, bei dem Chlorsilane, Alkoxysilane, Wasser und unpolares Lösemittel kontinuierlich zum Reaktionsgemisch zudosiert werden und das Reaktionsgemisch kontinuierlich abgeführt wird. Gegenstand der Erfindung ist ein Verfahren zur Herstellung von Hydroxygruppen und Alkoxygruppen aufweisenden Siliconharzen (S),
bei dem 100 Gewichtsteile Alkoxysilan, 0,01 bis 1 Gewichtsteile Kohlenwasserstoff, der bezogen auf Alkoxysilan 10 bis 2000 Gew.-ppm Cl enthält und Wasser
ohne weitere organische Lösungsmittel, welche bei 0,1 MPa und 20°C höchstens zu 1 Gew.-% in Wasser löslich sind,
mindestens 30 Minuten bei mindestens 50°C umgesetzt werden.
In dem Verfahren wird das an den Kohlenwasserstoff gebundene Chlor unter den Reaktionsbedingungen zu Chlorwasserstoff abgespalten. Dieser Chlorwasserstoff und das daraus gebildete Chlorid wirken im Verfahren als Hydrolyse- und Kondensationskatalysatoren.
Der bei der Umsetzung durch die Hydrolyse der Alkoxysilanen entstehende Alkohol führt zu einer guten Verteilung des Chlorids in der Reaktionsmischung.
Es werden so bei dem Verfahren die oft für die Anwendung bzw. Verarbeitung störend wirkenden chlorierten Kohlenwasserstoffe genutzt, um den Katalysator für Reaktionen wie Hydrolyse von Alkoxysilanen und nachfolgende Kondensationen zu bilden.
Bei dem Verfahren lassen sich ohne weitere Lösemittelzusätze, wie Toluol die Siliconharzen (S) herstellen. Da die für die Hydrolyse infrage kommenden Alkoxysilane aus den Chlorsilanen mit nahezu vollständiger HCl-Rückgewinnung hergestellt werden, bedeutet das kaum HCl-Verluste im Gesamtprozess und die Möglichkeit zur abwasserfreien Verfahrensführung. Die im Verfahren bei der Hydrolyse entstehenden sauren Alkohole können zur Herstellung des Alkoxysilans eingesetzt werden.

Die Umsetzung kann im Batch als auch kontinuierlich durchgeführt werden. Vorzugsweise wird das Alkoxysilan sowohl im Batch als auch für den Start eines kontinuierlich arbeitenden Reaktors vorgelegt. Dadurch wird ein alkohol- und chloridhaltiges Startgemisch hergestellt. Vorzugsweise wird das vorgelegte Alkoxysilan auf eine Temperatur erwärmt, die höchstens 5°C, insbesondere höchstens 2°C höher oder niedriger als der Siedetemperatur des bei der Hydrolyse entstehenden Alkohols ist oder auf mindestens 50°C, vorzugsweise mindestens 55°C, insbesondere mindestens 60°C erwärmt.

Vorzugsweise wird in das vorgelegte Alkoxysilan, vorzugsweise unter Rühren oder Umpumpen, die notwendige Wassermenge dosiert.

Vorzugsweise wird nach der Umsetzung eine Destillation zur Abtrennung des gebildeten Alkohols durchgeführt.
Die Destillation kann im Batchansatz im gleichen Reaktor wie die Umsetzung durchgeführt werden. Bei einem kontinuierlichen Verfahren gelangt das Reaktionsprodukt vorzugsweise in einen zweiten Reaktor, in dem es zunächst aufkonzentriert wird, vorzugsweise durch Destillation.

Die Befreiung von flüchtigen Bestandteilen kann im Batchansatz im gleichen Reaktor oder in einem weiteren Reaktor oder über einen Kurzwegverdampfer erfolgen. Die Befreiung von flüchtigen Bestandteilen kann im kontinuierlichen Verfahren im zweiten Reaktor oder in einem weiteren Reaktor oder über einen Kurzwegverdampfer erfolgen.

Auf diese Art und Weise lassen sich stabil Produkte innerhalb eines engen Spezifikationsbereiches herstellen.

Das eingesetzte Alkoxysilan weist vorzugsweise die allgemeine Formel (1) auf,

RₐSi(OR¹)₄₋ₐ (1),

in der
- R¹: R einen unsubstituierten oder mit Cl substituierten C₁- bis C₁₈-Kohlenwasserstoffrest, einen unsubstituierten oder mit Cl substituierten C₁- bis C₆-Alkylrest und
- a: den Wert 1, 2 oder 3 bedeuten.

Bevorzugte Alkoxysilane sind Methyltrimethoxysilan, Dimethyldimethoxysilan, Trimethylmethoxysilan, Methyltriethoxysilan, Dimethyldiethoxysilan und Trimethylethoxysilan und Gemische davon. Bevorzugte Gemische sind Methyltrimethoxysilan mit Trimethylmethoxysilan und Methyltriethoxysilan mit Trimethylethoxysilan.

Als Reste R werden Wasserstoff, C₁- bis C₈-Alkylreste C₁- bis C₈-Alkenylreste und Phenylgruppen, insbesondere Methyl-, Ethyl-Vinyl- und Phenylgruppen bevorzugt. Bei den Resten R¹ handelt es sich bevorzugt um n-Propyl-, i-Propyl-, Ethyl- oder Methylgruppen, insbesondere Methylgruppen.

Der Cl enthaltende Kohlenwasserstoff enthält vorzugsweise 1 bis 12, besonders bevorzugt insbesondere 2 bis 6 Kohlenstoffatome. Beispiele für den Cl enthaltenden Kohlenwasserstoff sind Chlorethan, Chlorpropane, Chlorbutane und Chlorpentane.

Vorzugsweise werden im Verfahren 0,02 bis 0,5 Gewichtsteile Cl enthaltender Kohlenwasserstoff umgesetzt.

Vorzugsweise enthält der Cl enthaltende Kohlenwasserstoff bezogen auf Alkoxysilan 100 bis 1500 Gew.-ppm, insbesondere 200 bis 1100 Gew.-ppm Cl.

Vorzugsweise werden im Verfahren 5 bis 20 Gewichtsteile, insbesondere 8 bis 15 Gewichtsteile Wasser umgesetzt.

Als weitere organische Lösungsmittel, welche bei 0,10 MPa und 20°C höchstens zu 1 Gew.-% in Wasser löslich sind, werden beispielsweise Kohlenwasserstoffe, wie Pentan, n-Hexan, Hexan-Isomerengemische, Heptan, Oktan, Waschbenzin, Petrolether, Benzol, Toluol und Xylole, sowie Schwefelkohlenstoff und Nitrobenzol verstanden.
Bei vorliegendem Verfahren werden entsprechend der eingesetzten Wassermenge vorzugsweise 15 bis 60 Gew.-% Alkohol, insbesondere 40 bis 50 Gew.-% Alkohol im Reaktionsgemisch gebildet.

Die hergestellten Hydroxygruppen und Alkoxygruppen aufweisenden Siliconharze (S) weisen vorzugsweise eine dynamische Viskosität bei 25 °C von 10 bis 1000 mm²/s, besonders bevorzugt von 15 bis 500 mm²/s, insbesondere von 15 bis 100 mm²/s auf.

Die Siliconharze (S) weisen vorzugsweise 0,01 bis 2 Gew.-%, besonders bevorzugt 0,02 bis 1 Gew.-%, insbesondere 0,05 bis 0,2 Gew.-% Hydroxygruppen auf.

Die Siliconharze (S) weisen vorzugsweise 1 bis 50 Gew.-%, besonders bevorzugt 5 bis 40 Gew.-%, insbesondere 10 bis 30 Gew.-% Alkoxygruppen auf.

Vorzugweise findet die Umsetzung bei mindestens 55°C und höchstens 180 °C statt.
Vorzugweise findet die für 40 bis 300 Minuten statt. Vorzugweise findet die Umsetzung bei einem Druck von 0,05 bis 0,5 MPa, insbesondere bei dem Druck der Umgebung statt.

Alle vorstehenden Symbole der vorstehenden Formeln weisen ihre Bedeutungen jeweils unabhängig voneinander auf. In allen Formeln ist das Siliciumatom vierwertig.
In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.
Die kinematischen Viskositäten werden, wenn nicht anders angegeben, an einem Rheometer SVM3000 der Fa. Anton Paar, gemäß ASTM D7042bestimmt.Das Anton Paar Viskosimeter SVM 3000 ist ein Rotationsviskosimeter und arbeitet nach dem Stabinger Messprinzip. Ein mit konstanter Drehzahl rotierendes Rohr wird mit der Probe gefüllt, in welcher sich der Messrotor, der langsamer als das Außenrohr rotiert, befindet. Es werden Drehmoment und Drehzahl bestimmt.
Die Messungen erfolgen im newtonschen Bereich der Proben. Falls nicht anders angegeben, gelten alle Viskositätsangaben bei 25°C und Normaldruck von 0,1 MPa.

### Beispiel 1

In einen 1,5 l Vierhalskolben, ausgestattet mit Rührer, Thermometer, Stickstoffspülung, Heizung, Kühler und Einleitungsrohr wurden 695 g Methyltrimethoxysilan mit einem Gehalt 106 ppm Chlor an Kohlenstoff gebunden vorgelegt, gerührt und auf 60 0 °C erhitzt. Bei dieser Temperatur erfolgte innerhalb von 20 - 30 min die Zugabe von 95 g teilentsalztem Wasser über das Einleitrohr, welches tief in das Produkt eintauchte. Unter leichtem Rückfluss wurde das Reaktionsgemisch eine Stunde weiter gerührt, bevor das durch die Hydrolyse gebildete Methanol durch Destillation entfernt wurde. Die Destillation war zweistufig. Bei Normaldruck wurde bis zu einer Sumpftemperatur von 145 °C Methanol abgetrieben, die Restentflüchtigung erfolgte bei 145 °C, 80 mbar über einen Zeitraum von 45 min.
Die dynamische Viskosität des Endproduktes betrug bei 25 °C 16,5 mm²/s. Es enthielt 0,11 % Hydroxygruppen und 31,2 % Methoxygruppen.

### Beispiel 2

Die Reaktionsführung und die Qualität des Methyltrimethoxysilan entsprachen Beispiel 1, nur wurde um die Viskosität leicht zu erhöhen und den Gehalt an Methoxygruppen geringfügig zu reduzieren der Anteil an vollentsalztem Wasser von 95 g auf 100 g erhöht.
Die dynamische Viskosität des Endproduktes betrug bei 25 °C 26,3 mm²/s. Es enthielt 0,21 % Hydroxygruppen und 28,7 % Methoxygruppen.

Durch Einsatz von Alkoxysilanen mit höherem Gehalt an chlorierten Kohlenwasserstoffen, kann der Anteil an Hydroxygruppen auch stark reduziert werden. Für die einzelnen Versuchsserien wurde Methyltrimethoxysilan verwendet.

### Beispiel 3

In einen 1,5 l Vierhalskolben, ausgestattet mit Rührer, Thermometer, Stickstoffspülung, Heizung, Kühler und Einleitungsrohr wurden 695 g Methyltrimethoxysilan mit einem Gehalt 730 ppm Chlor an Kohlenstoff gebunden vorgelegt, gerührt und auf 60 °C erhitzt. Bei dieser Temperatur erfolgte innerhalb von 20 - 30 min die Zugabe von 95 g vollentsalztem Wasser über das Einleitrohr, welches tief in das Produkt eintaucht. Unter leichtem Rückfluss wurde das Reaktionsgemisch eine Stunde weiter gerührt, bevor das durch die Hydrolyse gebildete Methanol durch Destillation entfernt wurde. Die Destillation war zweistufig. Bei Normaldruck wurde bis zu einer Sumpftemperatur von 145 °C Methanol abgetrieben, die Restentflüchtigung erfolgte bei 145 °C, 80 mbar über einen Zeitraum von 45 min.
Die Viskosität des Endproduktes betrug bei 25 °C 16,5 mm²/s. Es enthielt 0,05 % Hydroxygruppen und 31,2 % Methoxygruppen.

### Beispiel 4

Die Reaktionsführung und die Qualität des Methyltrimethoxysilan entsprachen Beispiel 3, nur wurde um die Viskosität leicht zu erhöhen und den Gehalt an Methoxygruppen geringfügig zu reduzieren der Anteil an vollentsalztem Wasser von 95 g auf 100 g erhöht.
Die Viskosität des Endproduktes betrug bei 25 °C 36,2 mm²/s. Es enthielt 0,03 % Hydroxygruppen und 27,5 % Methoxygruppen.

Um die Kapazität zu erhöhen und Produkteigenschaften leicht zu verändern, wurde das o. a. diskontinuierliche Verfahren für zwei Reaktoren angepasst und kann somit nahezu kontinuierlich ablaufen.

Die Hydrolysereaktion erfolgte im ersten Rührreaktor. Nach einer bestimmten Verweilzeit gelangte dieses Hydrolyseprodukt in ein nachfolgendes Rührwerk, wo unter Normaldruck schon so viel Alkohol abgetrieben werden konnte, dass ein Konzentrat mit einem Feststoffanteil von 70 - 90 % erhalten wurde. Durch den Feststoffanteil und dem kontinuierlich zulaufenden Hydrolysat wurden Bedingungen eingestellt, die es ermöglichten, das Produkt mehr oder weniger stark zu kondensieren. In einem letzten Schritt wurde das Konzentrat entflüchtigt. Dazu konnte die vorgeschaltete Hydrolysereaktion unterbrochen werden oder es wurden zwei Rührwerke betrieben. Das bedeutet, während in einem die Entflüchtigung zum Endprodukt erfolgte, konnte in einem die Destillation zum Konzentrat erfolgen. Damit würde der Prozess kontinuierlich möglich sein.

### Beispiel für den kontinuierlichen Prozess

### Beispiel 5

In einen 1 l Reaktor, ausgestattet mit Rührer, Thermometer, Stickstoffspülung, Heizung, Kühler und Einleitungsrohr wurden 695 g Methyltrimethoxysilan mit einem Gehalt 279 ppm Chlor an Kohlenstoff gebunden vorgelegt, gerührt und auf 60 °C erhitzt. Bei dieser Temperatur erfolgte innerhalb von 20 - 30 min die Zugabe von 97,5 g vollentsalztem Wasser über das Einleitrohr, welches tief in das Produkt eintauchte. Unter leichtem Rückfluss wurde das Reaktionsgemisch 30 Minuten weiter gerührt, bevor der Überlauf in das nachfolgende 2 l Rührwerk geöffnet wurde. Nach Erreichen von einem Füllstand von 350 ml wurde mit dem Heizen begonnen. Während der Füllstand in Reaktor 1 bei Dosierung von 695 g/h Silan Methyltrimethoxysilan und 97,5 g/h Wasser konstant bei 800 ml gehalten wurde, erfolgte im nachfolgenden Rührwerk die Aufkonzentrierung des Produktes bei Sumpftemperaturen von 70 - 72 °C. Das aus Reaktor 1 ankommende Hydrolysat wurde weit unter dem Flüssigkeitsspiegel des Konzentrates eingeleitet, da somit gewährleistet war, dass der für die Kondensation notwendige Katalysator gut verteilt wurde und wirksam werden konnte. Bei Erreichen von 1400 ml Konzentrat wurde die Hydrolyse unterbrochen. Das Konzentrat war 82,9 %-ig und enthielt zu diesem Zeitpunkt noch 21,4 ppm HCl. Die Entflüchtigung und die damit einhergehende Entsäuerung erfolgte bei einem Druck von 80 - 100 mbar, einer Temperatur von 145 °C über 45 Minuten.
Die dynamische Viskosität des Endproduktes betrug bei 25 °C 26,5 mm²/s. Es enthielt 0,11 % Hydroxygruppen und 29,8 % Methoxygruppen.

## Patentansprüche

1. Verfahren zur Herstellung von Hydroxygruppen und Alkoxygruppen aufweisenden Siliconharzen (S),
bei dem 100 Gewichtsteile Alkoxysilan,
0,01 bis 1 Gewichtsteile Kohlenwasserstoff, der bezogen auf Alkoxysilan 10 bis 2000 Gew.-ppm Cl enthält und
Wasser
ohne weitere organische Lösungsmittel, welche bei 0,1 MPa und 20°C höchstens zu 1 Gew.-% in Wasser löslich sind, mindestens 30 Minuten bei mindestens 50°C umgesetzt werden.

2. Verfahren nach Anspruch 1, bei dem das Alkoxysilan vorgelegt wird.

3. Verfahren nach einem oder mehreren der Ansprüche 1 oder 2, bei dem nach der Umsetzung eine Destillation zur Abtrennung des gebildeten Alkohols durchgeführt wird.

4. Verfahren nach einem oder mehreren der Ansprüche 1 bis 3, bei dem das eingesetzte Alkoxysilan die allgemeine Formel (1) aufweist,
RₐSi(OR¹)₄₋ₐ (1),
in der
**R¹** R einen unsubstituierten oder mit Cl substituierten C₁- bis C₁₈-Kohlenwasserstoffrest, einen unsubstituierten oder mit Cl substituierten C₁- bis C₆-Alkylrest und
**a** den Wert 1, 2 oder 3 bedeuten.

5. Verfahren nach einem oder mehreren der Ansprüche 1 bis 4, bei dem die Siliconharze (S) 0,01 bis 2 Gew.-% Hydroxygruppen aufweisen.

6. Verfahren nach einem oder mehreren der Ansprüche 1 bis 5, bei dem die Siliconharze (S) 1 bis 50 Gew.-% Alkoxygruppen aufweisen.

## Claims

1. Process for preparing silicone resins (S) bearing hydroxy groups and alkoxy groups,
wherein 100 parts by weight of alkoxysilane,
from 0.01 to 1 parts by weight of hydrocarbon containing, based on alkoxysilane, from 10 to 2000 ppm by weight of Cl and
water
without further organic solvents which at 0.1 MPa and 20°C are soluble to a maximum extent of 1% by weight in water
are reacted at at least 50°C for at least 30 minutes.

2. Process according to Claim 1, wherein the alkoxysilane is initially charged.

3. Process according to one or both of Claims 1 and 2, wherein a distillation for separating off the alcohol formed is carried out after the reaction.

4. Process according to one or more of Claims 1 to 3, wherein the alkoxysilane used has the general formula (1),
RₐSi(OR¹)₄₋ₐ (1),
where
**R** is an unsubstituted or Cl-substituted C₁-C₁₈-hydrocarbon radical,
**R¹** is an unsubstituted or Cl-substituted C₁-C₆-alkyl radical and
**a** is 1, 2 or 3.

5. Process according to one or more of Claims 1 to 4, wherein the silicone resins (S) have from 0.01 to 2% by weight of hydroxy groups.

6. Process according to one or more of Claims 1 to 5, wherein the silicone resins (S) have from 1 to 50% by weight of alkoxy groups.

## Revendications

1. Procédé de fabrication de résines de silicone (S) comprenant des groupes hydroxy et des groupes alcoxy, selon lequel 100 parties en poids d'alcoxysilane, 0,01 à 1 partie en poids d'un hydrocarbure qui contient par rapport à l'alcoxysilane 10 à 2 000 ppm en poids de Cl, et
de l'eau,
sans autres solvants organiques qui sont solubles dans l'eau à hauteur d'au plus 1 % en poids à 0,1 MPa et 20 °C, sont mis en réaction pendant au moins 30 minutes à au moins 50 °C.

2. Procédé selon la revendication 1, selon lequel l'alcoxysilane est chargé initialement.

3. Procédé selon une ou plusieurs des revendications 1 ou 2, selon lequel une distillation pour la séparation de l'alcool formé est réalisée après la réaction.

4. Procédé selon une ou plusieurs des revendications 1 à 3, selon lequel l'alcoxysilane utilisé présente la formule générale (1) :
RₐSi(OR¹)₄₋ₐ (1),
dans laquelle
R signifie un radical hydrocarboné en C₁ à C₁₈ non substitué ou substitué avec Cl,
R¹ signifie un radical alkyle en C₁ à C₆ non substitué ou substitué avec Cl, et
a signifie la valeur 1, 2 ou 3.

5. Procédé selon une ou plusieurs des revendications 1 à 4, selon lequel les résines de silicone (S) comprennent 0,01 à 2 % en poids de groupes hydroxy.

6. Procédé selon une ou plusieurs des revendications 1 à 5, selon lequel les résines de silicone (S) comprennent 1 à 50 % en poids de groupes alcoxy.
